(19) **Europäisches Patentamt / European Patent Office / Office européen des brevets**

(11) **EP 1 373 923 B1**

(12) **FASCICULE DE BREVET EUROPEEN**

(45) Date de publication et mention
de la délivrance du brevet:
**07.07.2010 Bulletin 2010/27**

(51) Int Cl.:
*G01S 5/14* [(2006.01)]     *G01S 1/04* [(2006.01)]
*H04B 1/18* [(2006.01)]

(21) Numéro de dépôt: **02759806.9**

(22) Date de dépôt: **29.03.2002**

(86) Numéro de dépôt international:
**PCT/FR2002/001110**

(87) Numéro de publication internationale:
**WO 2002/082119 (17.10.2002 Gazette 2002/42)**

(54) **RECEPTEUR DE DETERMINATION D'ORIENTATION D'UN MOBILE**

EMPFÄNGER ZUR BESTIMMUNG EINER MOBILOBJEKTORIENTIERUNG

RECEIVER FOR DETERMINING A MOBILE OBJECT ORIENTATION

(84) Etats contractants désignés:
**AT BE CH CY DE DK ES FI FR GB GR IE IT LI LU MC NL PT SE TR**

(30) Priorité: **06.04.2001 FR 0104736**

(43) Date de publication de la demande:
**02.01.2004 Bulletin 2004/01**

(73) Titulaire: **ASHTECH**
**44477 Carquefou Cédex (FR)**

(72) Inventeurs:
• **PRIOU, Michel,**
**Thales Intellectual Property**
**F-94117 Arcueil Cedex (FR)**
• **BOURASSEAU, Daniel,**
**Thales Intellectual Property**
**F-94117 Arcueil Cedex (FR)**

• **QUEMENER, Bertrand,**
**Thales Intellectual Property**
**F-94117 Arcueil Cedex (FR)**
• **ROLLET, Stéphane,**
**Thales Intellectual Property**
**F-94117 Arcueil Cedex (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 591 835    EP-A- 0 806 679**
**EP-A- 0 851 574    US-A- 5 185 610**
**US-A- 5 345 591    US-A- 6 154 170**

**Description**

L'invention concerne la détermination précise et rapide de l'orientation d'un mobile dans l'espace.

Typiquement, la navigation maritime nécessite une connaissance du cap suivi par un navire, qu'il soit en route, en manoeuvre, ou à l'arrêt. L'information de cap est une information sur l'orientation de l'axe longitudinal du navire dans un plan horizontal. L'invention sera décrite principalement à propos de la détermination du cap d'un navire ou d'un aéronef, mais elle est applicable à d'autres informations d'orientation d'un mobile, y compris en dehors du plan horizontal : une information d'attitude en roulis et tangage est une autre information intéressante, en navigation maritime comme en navigation aérienne, bien qu'elle ait en général moins besoin de précision que l'information de cap. L'information de cap ou d'orientation d'un véhicule terrestre est également intéressante. D'autres exemples d'application peuvent être envisagés tels qu'une information d'orientation d'une grue, d'une arme de tir, d'un piéton, etc.

La mesure de cap s'effectue traditionnellement à l'aide d'un compas magnétique, d'un compas gyroscopique, ou d'une centrale inertielle.

Le compas magnétique nécessite des corrections, dues à la différence entre le nord géographique et le nord magnétique, et dues aux masses magnétiques perturbantes dans l'environnement du compas.

Le compas gyroscopique, entretenu électriquement, est insensible aux variations magnétiques, et est très largement utilisé dans les navires. Mais les difficultés d'installation, la diminution de précision aux latitudes élevées, l'entretien mécanique, et le coût lorsqu'on veut une précision élevée, sont des handicaps importants.

Les centrales inertielles fournissent une mesure de qualité mais sont coûteuses et doivent être recalées périodiquement à l'aide d'autres moyens de mesure.

On peut également envisager d'utiliser, pour la détermination d'orientation, des moyens de mesure de position par satellites, utilisant par exemple les signaux radio émis par les satellites de positionnement des systèmes GPS (Global Positioning System) ou GLONASS notamment.

En utilisant plusieurs antennes de réception localisées en des points différents du mobile ( navire, aéronef, etc.), et en déterminant par des mesures différentielles les positions relatives des antennes, on peut calculer l'attitude en cap, roulis, tangage. La précision obtenue dans des conditions de réception favorables peut être de 3 milliradians en cap et de 6 à 8 milliradians en roulis ou tangage, en fonction de la distance entre les antennes.

On a donc déjà proposé des centrales de détection d'attitude à base de récepteurs de signaux satellites, comprenant plusieurs antennes de réception reliées à des circuits de réception et de traitement numérique de signal (un récepteur par antenne) chacun capable de déterminer des mesures de pseudo-distances entre l'antenne correspondante et les différents satellites qui sont en vue de l'antenne. Les pseudo-distances correspondant à un même satellite, mais déterminées par deux circuits de réception différents, sont différentes si les distances du satellite aux deux antennes correspondantes ne sont pas les mêmes. Un processeur de calcul, qui par ailleurs pilote le fonctionnement des récepteurs, reçoit les mesures de pseudo-distances en provenance de chaque récepteur et établit leurs différences; il en déduit, par des calculs trigonométriques classiques, les orientations des vecteurs reliant les antennes les unes aux autres, à partir de la connaissance de la position des satellites à l'instant de la mesure et de la connaissance de la distance fixe entre les antennes.

De telles centrales de détection d'attitude sont par exemple divulguées dans les brevets EP 0 591 835 et US 6 154 170.

Mais ces systèmes sont relativement chers. Un besoin existe pour des systèmes remplissant la même fonction, mais moins chers, même si c'est en partie au détriment de certaines performances.

Une des raisons du coût élevé est la complexité des circuits de réception et de traitement de signal nécessaires : pour chaque récepteur il faut prévoir un circuit de réception et de traitement analogique des signaux à fréquence radio reçus des satellites, et plusieurs canaux de traitement numérique correspondant chacun à un satellite respectif (par exemple 10 canaux, voire 16 canaux, par récepteur) ; et chaque canal de traitement comprend une circuiterie numérique complexe et travaillant à haute fréquence, avec des boucles de corrélation et d'asservissement de code pseudo-aléatoire, et des boucles de corrélation et d'asservissement de 1 phase de la fréquence porteuse du signal satellite.

L'ensemble de la centrale de détermination d'attitude peut devenir très coûteux, même pour une détermination de cap simple n'utilisant que deux antennes de réception. Un but de l'invention est de réaliser un dispositif simple à installer et peu coûteux, d'une part par la minimisation des circuits nécessaires, et d'autre part par la réutilisation de circuits de traitement analogique et numérique identiques à ceux qui servent dans des récepteurs de positionnement existants ; ceci afin que seuls les logiciels de calcul numérique aient besoin d'être modifiés, mais pas les puces de circuit intégré sur lesquelles sont réalisés les circuits de traitement analogique et numérique de signal servant à la détermination des pseudo-distances.

C'est pourquoi on propose selon l'invention un dispositif de détermination de l'orientation d'un mobile, selon la revendication 1.

Le principe de l'invention consiste en pratique à recevoir un signal issu de la première antenne pendant une durée multiple de la durée du code pseudo-aléatoire, à calculer à la fin de cette durée des premières valeurs numériques permettant l'élaboration d'une commande d'asservissement de phase de porteuse et à utiliser effectivement cette commande comme signal d'asservissement de phase de porteuse, à recevoir ensuite un signal issu de la deuxième antenne pendant une durée multiple de la durée du code pseudo-aléatoire, à calculer également à la fin de cette durée, par le même mode de calcul que les premières valeurs, des deuxièmes valeurs permettant l'élaboration d'une commande d'asservissement qui pourrait donc servir à l'asservissement de phase de porteuse pour la deuxième antenne, mais à continuer cependant à utiliser les premières valeurs pour établir le signal d'asservissement de phase de porteuse, et à utiliser une combinaison des premières et deuxièmes valeurs numériques pour le calcul de l'orientation.

En pratique, le calcul consiste à établir des premières valeurs numériques IpA et QpA, représentant respectivement des résultats de corrélation en phase et en quadrature de phase au bout d'une durée égale à la durée du code pseudo-aléatoire, pendant la réception des signaux de la première antenne, et des deuxièmes valeurs numériques correspondantes IpB et QpB pendant la réception des signaux de la deuxième antenne, à calculer une valeur numérique arctg(QpA/IpA) et à l'utiliser comme commande d'asservissement de phase de porteuse quelle que soit l'antenne utilisée, et à calculer la valeur numérique d'arctangente, avec détermination à $2\pi$, atan2[(IpB.QpA-QpB.IpA),(IpA,IpB+QpA.QpB)] représentant la différence de phase entre les signaux reçus d'un même satellite par les deux antennes, cette différence de phase étant utilisée pour le calcul de l'orientation du vecteur reliant les deux antennes. La continuité d'évolution de la différence de phase est reconstituée pour éviter les sauts lorsque la différence atteint $2\pi$.

Le circuit de commutation d'antennes comprend de préférence un moyen pour appliquer à la sortie du câble coaxial (qui relie le boîtier aux circuits de réception et traitement) alternativement deux niveaux d'une tension continue superposée aux signaux radiofréquence transitant par ce câble (de l'antenne vers le récepteur), un détecteur de niveau de tension pour détecter le niveau de tension à l'entrée de ce câble ou cette liaison, un commutateur commandé par le détecteur de niveau pour diriger une tension d'alimentation (issue de la tension continue présente sur le câble) soit vers un premier amplificateur de signaux d'antenne, relié à la première antenne, soit vers un deuxième amplificateur relié à la deuxième antenne, selon lé niveau de tension détectée, les sorties des deux amplificateurs étant connectées à l'entrée du câble coaxial pour transmettre sur le câble soit les signaux issus de la première antenne soit les signaux de la deuxième antenne, selon le niveau de tension continue appliqué à la sortie du câble.

Cette disposition permet d'effectuer la commutation désirée sans aucune connexion spécifique d'alimentation ou de commutation entre le récepteur de signaux et les antennes lorsque les antennes sont déportées à distance du récepteur. L'alimentation en tension continue des antennes et de leurs amplificateurs (situés à proximité de l'antenne) ainsi que la commande de commutation se font exclusivement par l'intermédiaire d'un seul câble coaxial qui, dans l'autre sens, sert à ramener les signaux d'antennes vers le récepteur.

Les signaux radiofréquence issus des deux antennes sont traités en analogique par un circuit de transposition de fréquence qui peut être identique à ceux de la technique antérieure, le principe de l'invention ne nécessitant pas la conception d'un circuit différent. Puis ces signaux sont convertis en numérique de la même façon que dans la technique antérieure. Enfin, ils passent dans des canaux de traitement numérique de signal dont la conception matérielle n'est pas modifiée par rapport à l'art antérieur. Les canaux de traitement numérique de signal fournissent des valeurs numériques à l'organe de calcul qui les contrôle, et reçoivent de cet organe de calcul des valeurs numériques. Les logiciels de fonctionnement de cet organe de calcul sont différents de ceux de la technique antérieure, mais le coût de la modification des logiciels est très inférieur à ce que serait le coût de conception et modification de puces de circuit intégré complexes.

Ainsi, le dispositif de détermination d'attitude selon l'invention peut être réalisé d'une manière particulièrement économique.

D'autres caractéristiques et avantages de l'invention apparaîtront à la lecture de la description détaillée qui suit et qui est faite en référence aux dessins annexés dans lesquels:

-    la figure 1 représente une vue générale d'un équipement de mesure d'orientation d'un mobile ;
-    la figure 2 représente le schéma électrique général du récepteur couplé aux antennes ;
-    la figure 3 représente le circuit de commutation d'antennes ;
-    la figure 4 représente l'architecture générale d'un canal de traitement numérique du récepteur.

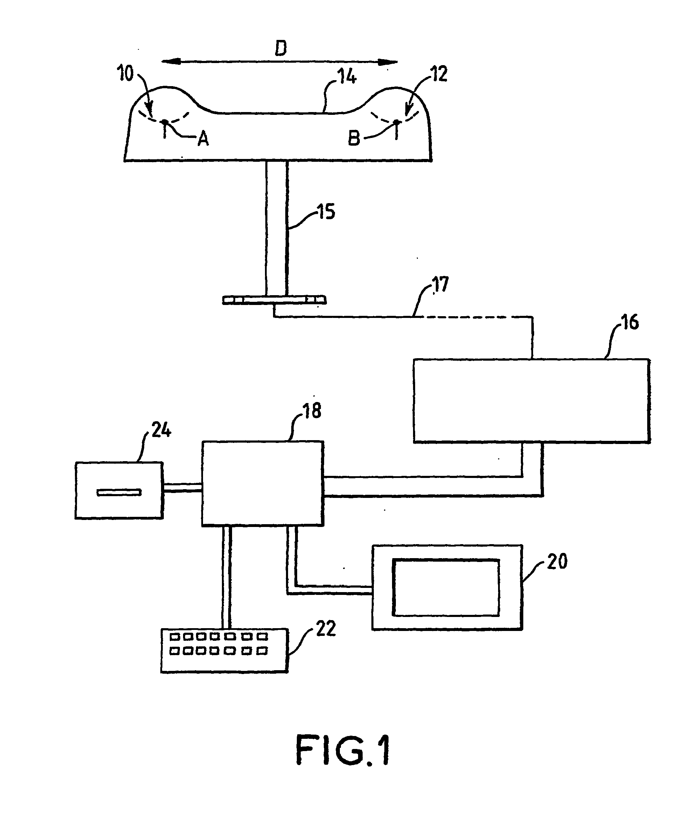

La figure 1 représente la structure générale de l'équipement de détection d'orientation, destiné à être installé par exemple sur un navire, pour détecter le cap du navire.

Dans l'exemple décrit, l'appareil comporte deux antennes de réception de signaux de positionnement par satellites et, pour mesurer le cap et accessoirement le roulis ou le tangage, on cherche à mesurer l'orientation du vecteur reliant les centres des antennes, sans tenir compte d'autres orientations du mobile dans l'espace. L'invention est cependant applicable également dans le cas où on a trois antennes non alignées, permettant une détermination complète d'orientation selon trois axes.

Les deux antennes 10 et 12, sont logées dans un boîtier commun 14 pourvu d'un capot ou radôme de matière plastique ; ce boîtier est porté par un support commun 15 et les centres A et B des antennes sont séparés par une distance D connue. Le support (ou le boîtier s'il n'y a pas de support) est destiné à être fixé sur le navire, avec un repérage de l'orientation du vecteur AB par rapport à l'axe général du navire, de manière qu'on puisse déduire le cap du navire de l'orientation de ce vecteur.

La distance entre les centres d'antennes peut être de quelques dizaines de centimètres par exemple.

Le boîtier de protection des antennes contient également des circuits électroniques analogiques tels que des préamplificateurs, et, comme on le verra plus loin, un circuit de commande de commutation des antennes.

Le récepteur de signaux de positionnement par satellite proprement dit, désigné par la référence générale 16, contient un circuit de réception de signaux radiofréquence, un circuit de conversion analogique-numérique, et des circuits de traitement numérique permettant la mesure de pseudo-distances. Il est de préférence déporté par rapport aux antennes et au support ; par exemple il est placé à l'intérieur du navire alors que le support d'antennes est à l'extérieur. Il est relié au support d'antenne seulement par un câble coaxial unique 17 (un seul fil entouré de son blindage).

Enfin, un organe 18 de calcul et de contrôle du récepteur, en pratique un micro-ordinateur pourvu de ses mémoires et de ses programmes de fonctionnement, est relié au récepteur par des liaisons numériques. L'organe de calcul est relié à des organes périphériques qui dépendent des applications : afficheur 20, clavier 22, lecteur/enregistreur de données ou de programmes 24, moyen de transmission filaire ou radio vers un utilisateur, ou simple interface de sortie vers une ligne de transmission du résultat des calculs. Dans un système de type « boussole », les fonctions 16, 18, 20, 22, 24 sont regroupées en un seul appareil.

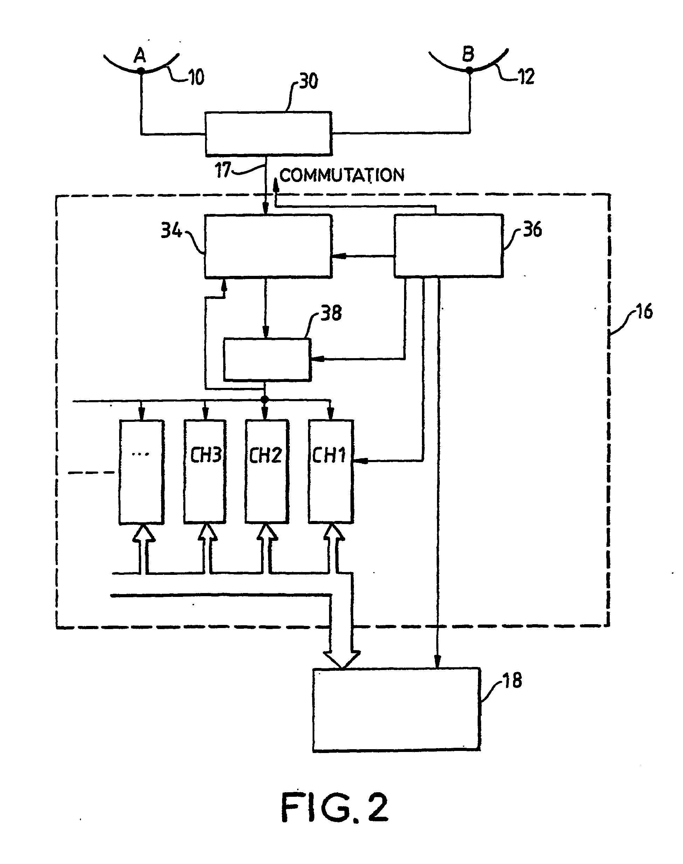

La figure 2 représente plus en détail l'architecture générale du récepteur 16 couplé d'un côté aux antennes 10 et 12 et de l'autre à l'organe de calcul 18.

Un circuit de commutation 30 permet de transmettre au récepteur 16 soit les signaux reçus des satellites sur l'antenne 10 soit les signaux reçus sur l'antenne 12. Dans l'exemple décrit, la commutation est périodique et la période est un multiple de la période d'émission du code pseudo-aléatoire qui module les signaux issus des satellites. On sait que cette période est de 1 milliseconde pour le code C/A des satellites de positionnement des systèmes GPS et GLONASS. Elle peut être différente pour d'autres codes de ces systèmes ou pour d'autres systèmes. En pratique, la commutation se fera de préférence toutes les 2 millisecondes, de sorte que le récepteur recevra des signaux alternativement de l'antenne 10 pendant 2 ms puis de l'antenne 12 pendant les 2 ms suivantes et ainsi de suite. La commande de multiplexage est telle que le temps de commutation est négligeable devant la durée de 2 millisecondes.

Le circuit de commutation 30 assure de plus les fonctions de préamplification du signal reçu par les antennes, du fait que celles-ci peuvent être éloignées du récepteur 16 et qu'il faut compenser les pertes en ligne pouvant survenir dans le câble coaxial 17 qui relie les antennes au récepteur.

Le récepteur 16 comprend, à son entrée, un circuit 34 de réception des signaux radiofréquence reçus par les antennes. Ce circuit 34 effectue les opérations de transposition de fréquence ramenant à une fréquence plus basse la fréquence porteuse radio modulée en phase par les satellites d'émission. Typiquement, on peut prévoir que la fréquence porteuse à 1575,42 MHz du système GPS est ramenée à 175,42 MHz mais d'autres possibilités peuvent être envisagées. Le circuit de réception radiofréquence comporte de préférence un circuit de contrôle automatique de gain permettant d'optimiser le niveau de signal qu'il fournit à sa sortie, en vue des opérations de conversion analogique-numérique qui suivent.

La transposition de fréquence et la conversion analogique-numérique nécessitent des opérations de génération de fréquences locales stables et bien connues, qui seront par ailleurs utilisées dans le traitement numérique de signal après conversion analogique-numérique. Pour simplifier la compréhension, on a représenté sur la figure 2 un circuit 36 de génération de signaux d'horloge, séparé du circuit de réception radiofréquence 34. Ce circuit comporte au moins une base de temps stabilisée par quartz, fournissant par exemple une fréquence d'horloge de base à 20 MHz ; il comporte également des circuits de multiplication et division de fréquence fournissant, outre les fréquences locales nécessaires à la transposition de fréquence (typiquement une fréquence de 1400 MHz pour passer de 1575,42 MHz à 175,42 MHz), diverses fréquences d'horloge nécessaires au fonctionnement de l'ensemble du récepteur. Dans l'exemple décrit, on peut avoir besoin d'une fréquence d'échantillonnage de 100 MHz pour piloter la conversion analogique-numérique, d'une fréquence de 25 MHz pour ramener en bande de base la modulation de phase à 175,42 MHz, et de fréquences plus basses de 100 kHz, 2 kHz, et 1 kHz à l'intérieur des circuits de traitement numérique de signal. La synthèse de fréquence peut être réalisée en pratique dans le circuit de réception radiofréquence pour les hautes fréquences, de 20 MHz et plus, et dans le circuit de traitement numérique pour les plus basses fréquences (au dessous de 100 MHz).

Le circuit de génération de signaux d'horloge 36 commande le circuit de commutation 30 présent dans le boîtier 14, pour multiplexer les signaux en provenance des deux antennes avec une périodicité multiple d'une milliseconde (période du code pseudo-aléatoire présent dans les signaux des satellites). Sur la figure 2, une flèche symbolise cette commande. Toutefois, il faut comprendre que les signaux de commande de multiplexage transitent par le câble coaxial unique 17.

Le circuit 34 de réception de signaux radiofréquence ne sera pas décrit en détail puisqu'il peut être constitué d'une manière classique.

Les signaux traités par le circuit 34 sont convertis par un convertisseur analogique-numérique 38 opérant par exemple à la fréquence de 100 MHz et réalisant dans ce cas un sous-échantillonnage du signal à fréquence intermédiaire de 175,42 MHz. Dans l'exemple décrit, la conversion est une conversion élémentaire sur deux bits qui sont un bit de signe et un bit d'amplitude. Le résultat de la conversion est de préférence renvoyé vers le circuit de réception radiofréquence pour assurer un contrôle automatique de gain permettant au convertisseur d'opérer d'une manière optimale.

Mais le résultat de la conversion analogique-numérique est principalement transmis au circuit de traitement numérique de signal qui établit des mesures numériques permettant la détermination de pseudo-distances entre les satellites et les antennes. Ce circuit comprend essentiellement N canaux parallèles CH1, CH2,... traitant chacun les signaux reçus d'un satellite déterminé. Le nombre de canaux peut être typiquement compris entre 8 et 16.

On rappelle que dans le système GPS chaque satellite émet une fréquence porteuse (L1) modulée en sauts de phase (0, π) d'une part par un code pseudo-aléatoire spécifique à ce satellite, code dont la période de bit (« chip ») est de 1 microseconde et dont la longueur totale est de 1 milliseconde, et d'autre part par des données de navigation dont la fréquence est plus faible (50 Hz). Chaque canal de traitement numérique génère une fréquence porteuse locale et un code pseudo-aléatoire local, et comprend des circuits d'asservissement du code local et de la porteuse locale sur le code et la porteuse reçus d'un satellite correspondant à ce canal.

L'organe de calcul 18 reçoit les mesures numériques issues des canaux, contrôle le fonctionnement de ces derniers (en particulier les circuits d'asservissement) et calcule d'une part la position du récepteur et d'autre part l'orientation du vecteur AB en fonction de la position de code et la phase de porteuse dans les différents canaux.

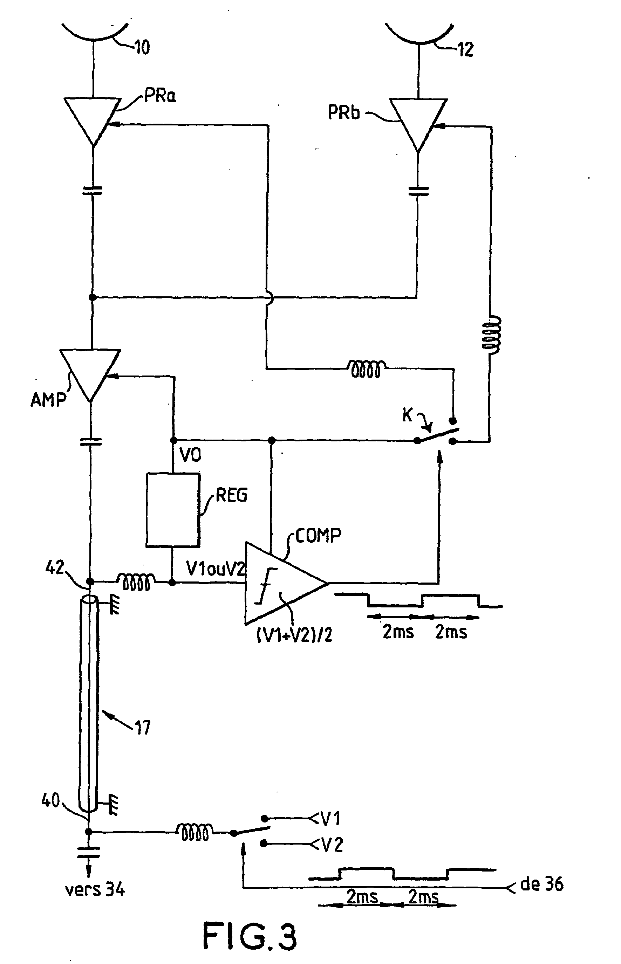

La figure 3 représente le circuit de commutation original 30 qui permet d'appliquer périodiquement et alternativement à l'entrée du circuit de réception radio 34 les signaux de l'antenne 10 d'abord, les signaux de l'antenne 12 ensuite. L'antenne 10 sera appelée antenne principale. L'antenne 12 sera appelée antenne secondaire. L'utilisation des signaux de l'antenne principale sera différente de l'utilisation des signaux de l'antenne secondaire. S'il y avait plus de deux antennes, il y aurait une antenne principale et plusieurs antennes secondaires et le circuit de commutation exécuterait une permutation circulaire pour appliquer successivement au récepteur les signaux de toutes les antennes.

La durée d'application des signaux de chaque antenne est un multiple de la durée (1 ms) du code pseudo-aléatoire. De préférence, la durée est de 2 millisecondes. On pourrait envisager des durées différentes pour l'antenne principale et pour l'antenne secondaire, une durée plus longue (par exemple 3 ou 4 ms) pouvant être affectée à l'antenne principale pour privilégier cette dernière dans ses fonctions d'acquisition et de poursuite des signaux des satellites.

Le circuit de commutation 30 agit suivant le principe suivant: l'antenne principale 10 et l'antenne secondaire 12 sont reliées chacune, à l'intérieur du boîtier 14, à un préamplificateur respectif PRa, PRb. L'un ou l'autre de ces préamplificateurs est alimenté en énergie mais pas les deux à la fois. Celui qui n'est pas alimenté en énergie ne transmet aucun signal radio issu de l'antenne à laquelle il est connecté. Celui qui est alimenté joue son rôle de préamplificateur des signaux de l'antenne correspondante. Les sorties des préamplificateurs sont reliées en une sortie unique qui transmettra le signal préamplifié quel que soit l'antenne d'où il provient.

De plus, l'alimentation en énergie des préamplificateurs provient d'une tension continue appliquée sur l'âme du câble coaxial 17 qui relie les antennes au récepteur, cette tension continue étant superposée au signal radiofréquence qui transite sur ce câble. La tension continue est produite à l'intérieur du récepteur 16 et est appliquée au câble coaxial par sa sortie, c'est-à-dire par le côté où il est connecté au récepteur 16 ; par conséquent aucune source d'énergie n'est nécessaire à l'intérieur du boîtier 14 et aucune connexion spécifique n'est nécessaire pour l'alimentation des préamplificateurs. Le câble coaxial 17 sert à la fois, dans le sens descendant, à amener les signaux radio des antennes vers le récepteur, et, dans le sens montant, à amener l'énergie du récepteur vers les antennes.

Enfin, la tension continue appliquée par le récepteur a deux niveaux possibles, V1 et V2, détectés par un comparateur à seuil situé à proximité des antennes à l'intérieur du boîtier 14, et le comparateur à seuil commande l'alimentation de l'un ou l'autre des préamplificateurs selon le niveau détecté.

Ainsi, avec le câble coaxial unique 17 qui transmet au récepteur les signaux en provenance des deux antennes, on peut alimenter et commuter les deux antennes à distance à partir du récepteur 16. Les très faibles puissances mises en jeu dans les préamplificateurs permettent une commutation extrêmement rapide devant la période de commutation. S'il y avait trois antennes, il faudrait évidemment appliquer trois niveaux de tension sur l'âme du câble coaxial et le comparateur devrait être remplacé par un détecteur de niveau de tension ou un double comparateur à seuil apte à distinguer les trois niveaux.

La figure 3 représente un schéma de circuit propre à assurer ce principe de commutation. Le niveau de tension appliqué par le récepteur sur une extrémité 40 de sortie de l'âme du câble coaxial 17 peut prendre une valeur V1 ou V2 (par exemple 6 volts et 9 volts respectivement) sous la commande d'un commutateur contrôlé par un signal d'horloge changeant d'état toutes les 2 millisecondes. Une inductance de faible valeur peut être insérée entre le commutateur et l'âme du câble coaxial pour éviter la transmission de signaux radio vers les sources de tension qui établissent les niveaux V1 et V2.

L'enveloppe de blindage du câble coaxial est mise à la masse du côté du récepteur, ainsi que du côté du circuit de commutation.

L'extrémité de sortie 40 de l'âme du câble coaxial est reliée au circuit radiofréquence 34 par l'intermédiaire d'une capacité de liaison pour que la tension continue V1 ou V2 ne perturbe pas le fonctionnement du circuit 34.

L'extrémité d'entrée 42 du câble 17 est reliée par l'intermédiaire d'une capacité de découplage à la sortie d'un amplificateur AMP. L'amplificateur AMP (facultatif) amplifie aussi bien les signaux venant de l'antenne 10 que les signaux venant de l'antenne 12, contrairement aux préamplificateurs PRa et PRb qui sont affectés chacun à une antenne respective.

L'extrémité 42 du câble est également connectée, de préférence par l'intermédiaire d'une inductance qui laisse passer la tension continue en arrêtant les signaux radiofréquence, à l'entrée d'un régulateur de tension REG qui fournit à sa sortie une tension fixe V0 (par exemple 5 volts) indépendamment du fait qu'il reçoit V1 ou V2. La tension V0 sert à l'alimentation en énergie des préamplificateurs PRa, PRb, et de l'amplificateur AMP.

La tension V1 ou V2 appliquée à l'entrée du régulateur REG est également appliquée à l'entrée d'un détecteur de niveau COMP qui fournit un signal logique haut ou bas selon que la tension d'entrée est V1 ou V2. Ce détecteur de niveau peut être un simple comparateur à seuil comparant la tension reçue à un seuil qui peut être (V1+V2)12.

La sortie du détecteur de niveau COMP commande un commutateur K qui permet d'appliquer la tension V0 comme source d'énergie soit au préamplificateur PRa, soit au préamplificateur PRb. Des inductances peuvent encore être prévues pour empêcher toute réinjection indésirable de signaux radio par les voies d'alimentation en énergie.

Les sorties des préamplificateurs PRa et PRb sont reliées entre elles par l'intermédiaire de capacités de découplage, et sont reliées à l'entrée de l'amplificateur AMP.

Ainsi, les signaux issus de l'antenne principale 10 passent à travers le préamplificateur PRa et l'amplificateur AMP pendant que le préamplificateur PRb est inhibé faute d'alimentation en énergie, et ils sont appliqués au câble coaxial pendant 2 millisecondes ; ensuite, pendant les 2 millisecondes qui suivent, les signaux issus de l'antenne secondaire 12 passent à travers le préamplificateur PRb et l'amplificateur AMP vers le câble coaxial, pendant que le préamplificateur PRa est inhibé faute d'alimentation.

On a donc pu réduire à un seul câble coaxial la liaison entre le récepteur et le support d'antennes, du fait que la commutation des antennes consiste à mettre alternativement sous tension un préamplificateur, l'autre étant mis hors tension. Cette mise hors tension assure une séparation électrique (isolation) des signaux d'antenne supérieure à 60 dB, sans ajouter de composants supplémentaires tels que des diodes PIN ou des transistors à effet de champ.

Les signaux issus du câble coaxial 17 sont traités par le circuit 34 (figure 2), principalement pour effectuer des transpositions de fréquence, des filtrages passe-bande, et un contrôle automatique de gain. Puis, ils sont convertis en numérique par le convertisseur 38. Les échantillons numérisés, par exemple sur deux bits dont un bit de signe, à une fréquence de 100 MHz, sont appliqués en parallèle à tous les canaux de traitement numérique CH1, CH2 , etc.

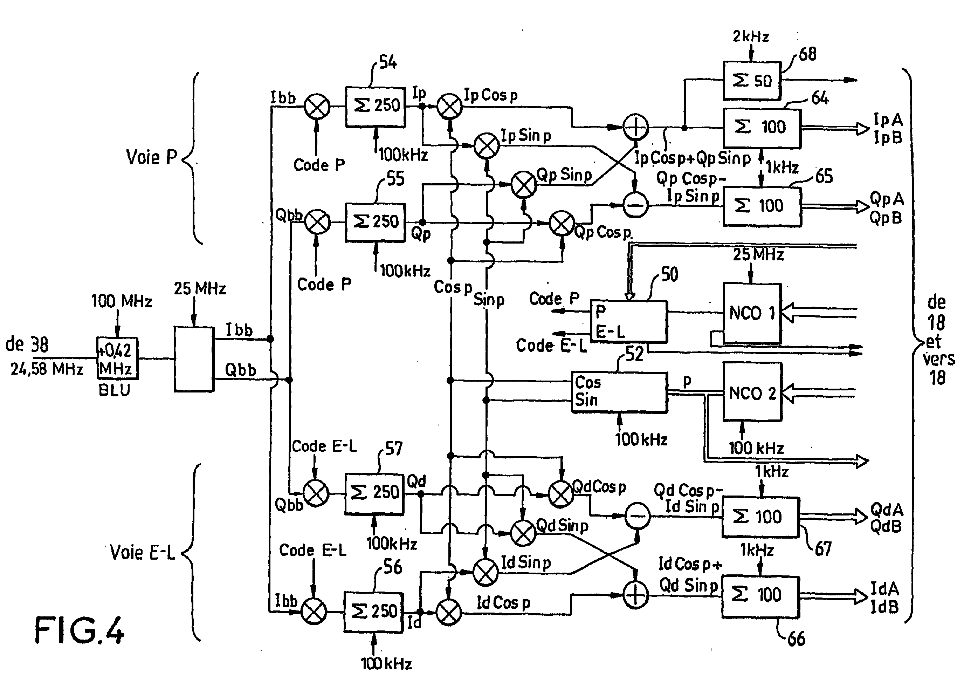

Les canaux de traitement numérique peuvent être identiques à ceux d'un récepteur classique et peuvent d'ailleurs être réalisés à partir des mêmes puces de circuit intégré que celles qui existent déjà, minimisant donc le coût de conception du système. On décrira donc sommairement, en référence à la figure 4, un exemple de canal pour faire comprendre comment l'invention utilise les valeurs numériques issues des canaux.

On rappelle que chaque canal comporte un générateur de code local qui émet un code correspondant à un satellite déterminé, un corrélateur pour corréler le signal reçu par l'antenne avec le code local, et une boucle d'asservissement pour déplacer l'instant de début d'émission du code local jusqu'à une position qui maximise le niveau de corrélation. Ainsi, le générateur de code local se synchronise sur le code présent dans le signal reçu par l'antenne si l'antenne reçoit un signal du satellite correspondant à ce code.

Chaque canal comporte également un générateur de phase de porteuse locale, un corrélateur pour corréler le signal reçu par l'antenne avec la phase produite par le générateur de phase de porteuse locale, et une boucle d'asservissement pour décaler la phase du générateur local jusqu'à une position qui maximise le niveau de corrélation.

En pratique les boucles d'asservissement de code et de phase sont imbriquées en ce sens que le signal d'antenne, divisé en un signal direct I et un signal en quadrature de phase Q, est multiplié à la fois par le code pseudo-aléatoire et par le sinus et le cosinus de la phase de porteuse locale, et que les résultats de ces multiplications sont combinés pour produire deux signaux de corrélation dont l'un agit sur le générateur de code local et l'autre agit sur le générateur de phase de porteuse. De plus, il peut y avoir plusieurs boucles de corrélation et d'asservissement agissant parallèlement, l'une fonctionnant avec un code local dit ponctuel et la ou les autres fonctionnant avec des codes locaux retardés et avancés d'un chip ou d'une fraction de chip par rapport au code ponctuel. La corrélation sur les signaux avancés et retardés est combinée avec la corrélation sur le code ponctuel pour permettre un meilleur asservissement du code local ; la corrélation sur le code ponctuel sert à calculer un signal d'asservissement de phase de porteuse. Il s'agit d'une disposition classique dans les récepteurs de positionnement par satellite.

Les résultats de cette double corrélation, de position de code et de phase de porteuse, sont fournis à l'organe de calcul 18. Ils servent d'une part à réaliser l'asservissement des boucles, et d'autre part à fournir à l'organe de calcul 18 les informations recherchées de pseudo-distances entre une antenne et le satellite correspondant à ce canal de traitement numérique. En effet, la pseudo-distance est définie d'une part par la position temporelle du code reçu (valeur grossière de la pseudo-distance), et d'autre part par la phase de porteuse (valeur fine). La détermination précise d'orientation du mobile repose sur les différences de phase de porteuse reçues par les deux antennes, les différences de position de code étant très faibles pour des antennes séparées de quelques dizaines de centimètres.

Dans l'exemple décrit à la figure 4, on considère que chaque canal reçoit des échantillons à 24,58 MHz qui résultent du sous-échantillonnage à 100 MHz (par le convertisseur 38) de la fréquence intermédiaire de 175,42 MHz. Les signaux sont transposés en bande latérale unique par décalage de 0,42 MHz, après quoi un échantillonnage à 25 MHz permet de fournir, en bande de base (fréquence porteuse ramenée autour de zéro), des échantillons en phase et en quadrature de phase désignés par Ibb et Qbb. Ce sont ces échantillons qui vont être corrélés, pour chaque canal, avec un code pseudo-aléatoire local et une fréquence porteuse locale (théoriquement nulle mais en pratique non nulle du fait de l'effet Doppler résultant du mouvement des satellites, du mouvement du mobile portant les antennes et de l'écart de marche entre l'oscillateur du satellite et celui du récepteur).

Sur la figure 4, on a représenté à titre d'exemple une corrélation classique d'une part avec un code ponctuel P et d'autre part avec un code dit E-L représentant la différence entre un code avancé et un code retardé d'un chip ou d'une fraction de chip par rapport au code ponctuel. Le code P et le code E-L sont engendrés par un générateur de code local 50. La position de début du code P (et donc du code E-L) est déterminée par un premier oscillateur à commande numérique de phase NCO1, contrôlé en phase et en fréquence par des signaux numériques en provenance de l'organe de calcul 18.

Une fréquence porteuse locale, représentant la fréquence Doppler pour le satellite correspondant au canal considéré, est engendrée par un deuxième oscillateur à commande numérique de phase NCO2, également contrôlé par l'organe de calcul 18. Cette fréquence pilote un circuit 52 de calcul de sinus et cosinus, qui, à partir de la phase de sortie p de l'oscillateur NCO2 établit des valeurs numériques sinp et cosp représentant le sinus et le cosinus de cette phase. Un échantillon de sinus et un échantillon de cosinus sont de préférence fournis toutes les 10 microsecondes.

Les échantillons Ibb et Qbb sont multipliés par le code local ponctuel P dans la boucle de corrélation ponctuelle et par le code E-L dans la boucle de corrélation E-L. Les résultats des multiplications sont accumulés dans des accumulateurs 54, 55, 56, 57 qui établissent un résultat de filtrage de type FIR au bout de 10 microsecondes (accumulation sur 250 échantillons à fréquence 25 MHz). Les résultats de l'accumulation des échantillons en phase Ibb et en quadrature de phase Qbb, multipliés par les codes P et E-L, sont désignés respectivement par les quantités Ip et Qp pour la voie de corrélation ponctuelle, Id et Qd pour la voie de corrélation différence E-L. Ils sont ensuite multipliés chacun par le sinus et le cosinus de la phase de porteuse.

Les résultats Ip.sinp, Qp.sinp, Ip.cosp, et Qp.cosp, sont combinés entre eux dans des additionneurs et soustracteurs, pour former respectivement des valeurs Ipcosp+Qpsinp, Qpcosp-Ipsinp dans la voie de corrélation ponctuelle. De même, on forme des quantités Id.cosp+Qdsinp et Qdcosp-Idsinp dans la voie de corrélation différence E-L.

Les combinaisons Ip.cosp+Qp.sinp et Qp.cosp-Ip.sinp sont accumulées sur 100 échantillons de Ip et Qp (donc sur la durée d'un code pseudoaléatoire de 1 ms) dans des accumulateurs respectifs 64, 65 pour la voie ponctuelle.

Il sort périodiquement des accumulateurs 64 et 65, à une fréquence de 1 kHz, des nouvelles valeurs numériques qui seront désignées soit par IpA et QpA, soit par IpB et QpB, selon que l'accumulation est faite sur des échantillons de l'antenne principale 10 ou de l'antenne secondaire 12.

De la même manière, les combinaisons Id.cosp+Qd.sinp et Qd.cosp-Id.sinp sont accumulées sur 100 échantillons de Id et Qd dans des accumulateurs respectifs 66, 67 pour la voie différence pour produire des valeurs numériques IdA, QdA pour l'antenne principale, et IdB, QdB pour l'antenne secondaire. ,

Toutes ces valeurs numériques sont envoyées à l'organe de calcul 18 avec une périodicité de renouvellement de 1 millisecondes, mais toutes les 2 millisecondes, les antennes sont commutées, de sorte qu'en pratique, dans cet exemple, deux valeurs successives IpA alternent avec deux valeurs successives IpB ; de même, les valeurs QpA, IdA, QdA sont calculées deux fois de suite avant d'alterner avec des valeurs QpB, IdB, QdB également calculées deux fois de suite.

Selon l'invention, on asservit le code à l'aide des signaux issus des accumulateurs, sans se préoccuper de savoir s'ils proviennent de l'antenne A ou de l'antenne B, et pour cela on calcule par exemple des quantités

$$(IpA.IdA + QpA.QdA)/(IpA^2+QpA^2+|IpA.IdA + QpA.QdA|) \text{ pour}$$

l'antenne 10, et

$$(IpB.IdB + QpB.QdB)/(IpB^2+QpB^2+|IpB.IdB + QpB.QdB|) \text{ pour}$$

l'antenne 12.

Ces quantités alternées toutes les 2 millisecondes sont traitées comme si elles provenaient d'une seule et même antenne. Elles sont filtrées par calcul pour établir un signal d'erreur pilotant l'oscillateur à commande numérique de phase NCO1 ; l'oscillateur tend à modifier la position de code pseudo-aléatoire dans un sens tendant à minimiser le signal d'erreur et ainsi à synchroniser le code local sur le code reçu du satellite correspondant à ce canal. On pourrait cependant aussi envisager de ne calculer le signal d'erreur que sur la base des quantités issues de l'antenne principale.

D'autre part, un signal d'asservissement du deuxième oscillateur numérique NCO2 est calculé à partir des valeurs numériques IpA et QpA issues de la première antenne seulement. Ce signal est calculé à partir d'une valeur arctg(QpA/IpA), ambiguë à $\pi$, établie dans l'organe de calcul à partir des sorties des accumulateurs 64 et 65 pendant qu'elles fournissent ces résultats IpA et QpA. Mais, pendant que les accumulateurs fournissent les signaux IpB et QpB suite à la connexion de l'antenne secondaire, l'organe de calcul continue à fournir le même signal d'asservissement précédemment calculé sur la base de la valeur arctg(QpA/IpA). Le calcul du signal d'asservissement fait intervenir un filtrage de la valeur arctg(OpA/IpA)

La sortie numérique de l'oscillateur NCO2 représente la phase d'une porteuse locale (transposée en bande de base) représentant la fréquence Doppler entre le récepteur et le satellite; cette phase est synchronisée sur la phase de la porteuse reçue du satellite sur l'antenne principale 10.

Pour déterminer la différence de phase de porteuse reçue sur les deux antennes, l'organe de calcul détermine, à partir des valeurs IpA, QpA et IpB, QpB successivement reçues des deux antennes, la valeur numérique suivante :

$$\mathbf{atan2[(IpB.QpA-QpB.IpA),(IpA.IpB+QpA.QpB)]}$$

En effet, cette valeur (qui est égale à arctg[(IpB.QpA-QpB.IpA)/ (IpA.IpB+QpA.QpB)] définie sur $2\pi$ et non à $\pi$ près comme dans les réalisations classiques, le premier terme de la fonction étant le sinus de l'angle et le deuxième terme étant le cosinus) représente la différence de phase recherchée.Cette différence de phase est liée à la différence de trajet des ondes radio entre le satellite et les deux antennes. Connaissant la longueur d'onde du signal radio, la distance entre les deux antennes, la position du récepteur (déterminée par l'organe de calcul 18 à partir des mesures faites sur tous les canaux) et la position du satellite au même instant, on peut en déduire une information sur l'angle formé entre le vecteur AB reliant les antennes et un plan perpendiculaire à l'axe récepteur/satellite. En effectuant le même calcul sur d'autres canaux, on peut déterminer complètement l'orientation du vecteur dans l'espace.

La continuité d'évolution de la différence de phase entre les deux antennes est reconstituée au delà d'un tour par contrôle des valeurs successives de phase. La phase à l'instant N-1 est retranchée de la phase à l'instant N ; cette différence est comparée à $+\pi$ et $-\pi$, et, si le résultat est au delà de $\pi$, on considère qu'il y a eu franchissement du tour par passage par 0 ou $2\pi$ ; on corrige alors le résultat en ajoutant ou retranchant $2\pi$. Ce procédé étant sensible au bruit, on lui adjoint un filtre (numérique) et on compare la phase en sortie de ce filtre à la phase en entrée de façon à détecter et corriger les sauts de tour dus au bruit. On réalise ainsi une mesure continue et filtrée de la différence de phase entre les deux antennes. Ce procédé rend plus robuste et simplifie le lever d'ambiguïté de phase dans la solution de cap par rapport à une solution classique de mesure de la différence de phase classique ambiguë à $\pi$.

On notera que cette méthode selon l'invention consistant à calculer la différence de phase par détermination d'arctangente à $2\pi$ près est d'ailleurs utilisable indépendamment du fait que les deux antennes sont multiplexées ou non. Elle peut même être étendue à la détermination de position (et non d'orientation) d'un mobile ayant une seule antenne et dans laquelle on fait la détermination de position du mobile par rapport à une position antérieure connue, en suivant de manière continue l'évolution de la phase. Dans ce dernier cas, on calcule la valeur numérique atan2 en utilisant comme arguments les quantités IpB.QpA-QpB.IpA (sinus de l'angle de phase) et IpA.IpB+QpA.QpB (cosinus de l'angle de phase) dans lesquelles IpA, QpA représentent les mesures de phase pour une première position (connue ou calculée précédemment) du mobile et IpB, QpB représentent les mesures pour une deuxième position (à déterminer). Selon l'application, le calcul de différence de phase par Atan2, porte donc soit sur les signaux issus de deux antennes, soit sur les signaux successivement reçus d'une même antenne.

On notera que la détermination de la solution géométrique du problème peut se faire soit classiquement, par approximation successives, soit selon la méthode indiquée dans la demande de brevet antérieure FR 00 05183 du 21 avril 2000. Aucune procédure de calibration n'est nécessaire.

Le calcul d'orientation est différentiel, en ce sens qu'on détermine la position du point B par rapport au point A et non par rapport à un repère indépendant. Cette détermination se fait à partir de la différence de phase ou de pseudo-distances mesurées en chaque point.

Globalement, sous réserve de la notion classique de double différence de pseudo-distances (différences de pseudo-distances entre couples de satellites), le principe de calcul est le suivant :

- on calcule les positions des satellites à l'instant de mesure t, grâce aux éphémérides des satellites ;

- on détermine, à partir des mesures différentielles de pseudo-distances, les distances différentielles entre les points A et B selon les axes de visée des satellites. On obtient des distances qu'on peut considérer globalement comme les projections, le long de ces axes, de la distance entre A et B ; ce sont des distances mesurées ;
- on calcule parallèlement les distances, le long des mêmes axes entre le point B et des positions estimées du point A ; ce sont des distances estimées ; les positions estimées résultent soit de calculs précédemment effectués, soit d'une répartition de points estimés sur un cercle ou une portion de sphère de centre B et de rayon D ;
- on détermine selon chaque axe la différence entre la distance mesurée et la distance estimée, qu'on peut appeler grandeur d'écart ou "innovations" selon cet axe ;
- on calcule à partir de ces grandeurs d'écart, à l'aide de la matrice des cosinus directeurs représentant les directions des axes de visée des satellites, l'écart en longitude, latitude, altitude, entre la position mesurée du point A et la position estimée ;
- on rajoute à la position estimée initiale les écarts calculés, et on obtient une position calculée du point A qui est soit une position définitive, soit une nouvelle position estimée en vue d'une étape ultérieure de calcul ;
- on convertit les valeurs de position définitives du point A en informations d'orientation désirées (cap notamment).

On notera que la détermination de position du récepteur, même approximative, est indispensable pour déterminer ensuite l'orientation. Cette détermination suppose l'acquisition des données de navigation des satellites. Cette acquisition se fait à partir de la démodulation de données à 50 Hz, par détection des sauts de phase qui se produisent en début de code pseudo-aléatoire. Or ces sauts de modulation de données peuvent se situer soit pendant l'acquisition par l'antenne principale soit pendant l'acquisition par l'antenne secondaire. Cette détection de sauts de phase dus aux données de navigation se fait usuellement en observant le signe des valeurs numériques Ip et elle utilise un accumulateur 68 accumulant sur une demi-période de code pseudo-aléatoire la combinaison Ipcosp+Qpsinp.

Lorsque les sauts de phase se produisent pendant l'acquisition par l'antenne secondaire 12, il faut éviter de faire le calcul de différence de phase entre les antennes tel qu'expliqué précédemment. En effet, ce calcul serait erroné à cause du saut de phase au milieu de la mesure. On élimine donc la mesure de différence de phase pendant la période de 4 millisecondes correspondante. On sait à quel moment un tel saut de phase dû à la modulation de données peut se produire grâce à la synchronisation sur le rythme des données établie par le traitement du canal. Les changements ultérieurs sont suivis par l'organe de calcul et on peut savoir à tout moment si un front de donnée binaire est présent pendant la réception par l'antenne principale ou par l'antenne secondaire. Ceci permet de reconstituer dans son intégralité l'information de donnée de navigation, sans perte due à la commutation des antennes.

On a ainsi décrit un récepteur particulièrement simple, et de conception peu coûteuse pour la détermination de l'orientation d'un mobile. Le dispositif ne dégrade en rien la récupération des données de navigation. Il est utilisable avec les systèmes actuels tels que GPS (modulation à 50Hz), GLONASS (100Hz), WAAS/ EGNOS/ MSAS (500Hz) ainsi qu'avec le futur système Galileo. Dans le cas des signaux WAAS/EGNOS/MSAS, la modulation de données (éphémérides et autres) sur les signaux émis par les satellites est à 500Hz, fréquence qui est proche de la fréquence de commutation des antennes. Dans ce cas, les données doivent être récupérées en utilisant les deux antennes et en s'affranchissant de l'écart de phase entre les deux antennes. Il est alors souhaitable d'utiliser deux canaux de traitement à chaque satellite au lieu d'un seul, chaque canal étant associé à une antenne. Mais les autres canaux, affectés aux satellites GPS ou GLONASS restent multiplexés pour recevoir alternativement les signaux des deux antennes.

La réception de N satellites sur P antennes ne nécessite qu'un récepteur standard de N canaux au lieu d'un récepteur de PxN canaux.

## Revendications

1. Dispositif de détermination de l'orientation d'un mobile, comprenant au moins deux antennes (10, 12) de réception de signaux de positionnement par satellite, un circuit commun (34) de réception et de traitement des signaux radiofréquence reçus par les antennes, un circuit de conversion analogique-numérique (38) , N canaux de traitement numérique de signal (CH1, CH2 ...) comprenant chacun un circuit de corrélation et d'asservissement de la position d'un code pseudo-aléatoire périodique local et de la phase d'une porteuse locale, ces canaux fournissant chacun des mesures de corrélation entre le signal reçu d'un satellite respectif et le code local en vue de l'asservissement du code local et de la porteuse locale sur le signal reçu, et un organe de calcul (18) pour recevoir des mesures numériques de corrélation issues des canaux et pour contrôler le circuit d'asservissement, dans lequel :

   - le circuit (34) de réception et traitement des signaux radiofréquence comprend un moyen de calcul d'un signal numérique d'asservissement du code de chaque canal,
   - le circuit de réception et traitement comprend en outre un moyen de calcul d'un signal numérique d'asservissement de la porteuse de chaque canal, ce moyen agissant seulement à partir du signal reçu de la première antenne,

- le circuit de réception et traitement comprend également un moyen de calcul de la différence de phase entre la porteuse reçue sur la première antenne et la porteuse reçue sur la deuxième antenne pour chaque canal, ce moyen agissant à partir des signaux reçus d'une part de la première antenne et d'autre part de la deuxième antenne pendant que le circuit d'asservissement reste commandé par le signal d'asservissement de porteuse calculé à partir des signaux issus de la première antenne,

ce dispositif étant **caractérisé en ce que** :

- les antennes (10, 12) sont montées dans un boîtier commun (14) contenant un moyen de commutation (30) pour diriger vers le circuit (34) de réception et de traitement des signaux radiofréquence alternativement un signal issu de la première antenne (10) et un signal issu de la deuxième antenne (12),
- le boîtier commun (14) est relié au circuit (34) de réception et traitement des signaux radiofréquence par un unique câble coaxial (17),
- les sorties des antennes sont reliées au câble coaxial par des préamplificateurs d'antenne (PRA, PRB),
- les préamplificateurs d'antennes sont alimentés à partir du câble coaxial,
- le circuit de réception et traitement comprend un moyen (36) pour établir sur le câble coaxial un signal périodique de commande du moyen de commutation,
- le moyen de commutation est relié au câble coaxial et comprend des moyens de détection du signal de commande périodique,

2. Dispositif selon la revendication 1, **caractérisé en ce que** le moyen de calcul d'un signal d'asservissement du code de chaque canal agit à partir des signaux issus des deux antennes indépendamment de la commutation des antennes.

3. Dispositif selon l'une des revendications 1 et 2, **caractérisé en ce que** le moyen de calcul du signal d'asservissement de porteuse comprend des moyens pour établir des premières valeurs numériques IpA et QpA, représentant respectivement des résultats de corrélation en phase et en quadrature de phase au bout d'une durée égale à la durée du code pseudo-aléatoire, pendant la réception des signaux de la première antenne (10), et des deuxièmes valeurs numériques correspondantes IbB et QpB pendant la réception des signaux de la deuxième antenne (12), et des moyens pour calculer une valeur numérique arctg(QpA/IpA) servant à l'établissement d'un signal d'asservissement de phase de porteuse pendant la réception des signaux des deux antennes.

4. Dispositif selon la revendication 3, **caractérisé en ce que** le moyen de calcul de différence de phase comprend des moyens pour calculer une valeur numérique atan2[(IpB.QpA-QpB.IpA),(IpA.IpB+QpA.QpB)] représentant la différence de phase entre les signaux reçus d'un même satellite par les deux antennes.

5. Dispositif selon l'une des revendications 1 à 4, **caractérisé en ce que** le moyen pour établir un signal périodique de commande comprend un moyen pour appliquer à la sortie (40) du câble coaxial alternativement deux niveaux d'une tension continue (V1, V2) superposée aux signaux radiofréquence transitant par cette liaison, et les moyens de détection du signal périodique de commande comprennent un détecteur de niveau de tension (COMP) pour détecter le niveau de tension à l'entrée (42 du câble coaxial, et le moyen de commutation comprend un commutateur (K) commandé par le détecteur de niveau pour diriger une tension d'alimentation (V0) issue de la tension continue présente sur le câble soit vers un premier amplificateur (PRA) de signaux d'antenne, relié à la première antenne (10), soit vers un deuxième amplificateur (PRB) relié à la deuxième antenne (12), selon le niveau de tension détectée, les sorties des deux amplificateurs étant connectées à l'entrée (42) du câble pour transmettre à la sortie (40) du câble soit les signaux issus de la première antenne soit les signaux de la deuxième antenne, selon le niveau de tension continue appliqué à la sortie du câble.

6. Dispositif selon l'une des revendications précédentes, **caractérisé en ce que** le moyen de commutation (30) des antennes agit avec une période multiple de la période du code pseudo-aléatoire.

**Claims**

1. A device for determining the orientation of a mobile, comprising at least two antennas (10, 12) for receiving satellite-based positioning signals, a common circuit (34), for reception and for processing of the radio signals received by the antennas, an analog/digital conversion circuit (38), N digital signal processing channels (CH1, CH2 ...) each comprising a circuit for correlation and for slaving of the position of a local periodic pseudo-random code and of the phase of a local carrier, these channels each delivering measurements of correlation between the signal received from a respective satellite and the local code with a view to the slaving of the local code and of the local carrier to the signal received, and a calculation facility (18) for receiving digital correlation measurements emanating from the channels and for controlling the slaving circuit, in which :

- the circuit (34) for receiving and processing the radiofrequency signals comprises a means of calculation of a digital signal for slaving the code of each channel,
- the reception and processing circuit furthermore comprises a means of calculation of a digital signal for slaving the carrier of each channel, this means acting only on the basis of the signal received from the first antenna,
- the reception and processing circuit also comprises a means of calculation of the phase difference between the carrier received on the first antenna and the carrier received on the second antenna for each channel, this means acting on the basis of the signals received on the one hand from the first antenna and on the other hand from the second antenna while the slaving circuit remains controlled by the carrier slaving signal calculated on the basis of the signals emanating from the first antenna,

this device being **characterized in that:**

- the antennas (10, 12) are mounted in a common box (14) containing a switching means (30) for directing alternately a signal emanating from the first antenna (10) and a signal emanating from the second antenna (12) to the circuit (34) for reception and for processing of the radio signals,
- the common box (14) is linked to the circuit (34) for reception and processing of radio signals by a unique coaxial cable (17),
- the antenna outputs are connected to the coaxial cale through antenna preamplifiers (PRA, PRB),
- the antenna preamplifiers receive a supply from the coaxial cable,
- the circuit for reception and processing comprises a means for establishing on the coaxial cable a periodic control signal for the means of switching of the antennas,
- the means of switching is connected to the coaxial cable and comprises means for detecting the periodic control signal.

2. The device as claimed in claim 1, **characterized in that** the means of calculation of a signal for slaving the code of each channel acts on the basis of the signals emanating from the two antennas independently of the switching of the antennas.

3. The device as claimed in one of claims 1 and 2, **characterized in that** the means of calculation of the carrier slaving signal comprises means for establishing first numerical values IpA and QpA, respectively representing in-phase and phase quadrature correlation results at the end of a duration equal to the duration of the pseudo-random code, during the reception of the signals from the first antenna (10), and corresponding second numerical values IpB and QpB during the reception of the signals from the second antenna (12), and means for calculating a numerical value $\arctan(QpA/IpA)$ serving for the establishment of a carrier phase slaving signal during the reception of the signals from the two antennas.

4. The device as claimed in claim 3, **characterized in that** the means of calculation of phase difference comprises means for calculating a numerical value $atan2[(IpB.QpA-QpB.IpA), (IpA.IpB+QpA.QpB)]$ representing the phase difference between the signals received from one and the same satellite by the two antennas.

5. The device as claimed in one of claims 1 to 4, **characterized in that** the means for establishing a periodic control signal comprises a means for applying to the output (40) of the coaxial cable alternately two levels of a DC voltage (V1, V2) superimposed on the radio signals traveling through this link, and the means for detecting the periodic control signal comprise a voltage level detector (COMP) for detecting the voltage level at the input (42) of the coaxial cable, and the switching means comprise a switch (K) controlled by the level detector for directing a supply voltage (V0) emanating from the DC voltage present on the coaxial cable either to a first amplifier (PRA) of antenna signals, which is linked to the first antenna (10) or to a second amplifier (PRB) which is linked to the second antenna (12), depending on the level of voltage detected, the outputs of the two amplifiers being connected to the input (42) of the coaxial cable so as to transmit to the output (40) of the link either the signals emanating from the first antenna or the signals from the second antenna, depending on the DC voltage level applied to the output of the coaxial cable.

6. The device as claimed in one of the preceding claims, **characterized in that** the antenna switching means (30) acts with a period which is a multiple of the period of the pseudo-random code.

**Patentansprüche**

1. Vorrichtung zum Bestimmen der Orientierung eines mobilen Objekts, die Folgendes umfasst: wenigstens zwei Antennen (10, 12) zum Empfangen von Positioniersignalen per Satellit, eine gemeinsame Schaltung (34) zum Empfangen und Verarbeiten von von den Antennen empfangenen Funkfrequenzsignalen, eine AnalogDigital-Wandlerschaltung (38), N Kanäle zur digitalen Signalverarbeitung (CH1, CH2 ...), die jeweils eine Schaltung zum Korrelieren und Regeln der Position eines pseudozufälligen periodischen lokalen Codes und der Phase eines lokalen Trägers umfasst, wobei diese Kanäle jeweils Korrelationsmesswerte zwischen dem von einem jeweiligen Satelliten empfangenen Signal und dem lokalen Code liefern, um den lokalen Code und den lokalen Träger auf dem empfangenen Signal zu regeln, und eine Recheneinheit (18) zum Empfangen von digitalen Korrelationsmesswerten von den Kanälen und zum Steuern der Regelungsschaltung, wobei:

   - die Funkfrequenzsignalempfangs- und -verarbeitungsschaltung (34) ein Mittel zum Berechnen eines digitalen Signals zum Regeln des Codes jedes Kanals umfasst,
   - die Empfangs- und Verarbeitungsschaltung ferner ein Mittel zum Berechnen eines digitalen Signals zum Regeln des Trägers jedes Signals umfasst, wobei dieses Mittel nur auf der Basis des von der ersten Antenne empfangenen Signals wirkt,
   - die Empfangs- und Verarbeitungsschaltung auch ein Mittel zum Berechnen der Phasendifferenz zwischen dem auf der ersten Antenne empfangenen Träger und dem auf der zweiten Antenne empfangenen Träger für jeden Kanal umfasst, wobei dieses Mittel auf der Basis der von der ersten Antenne einerseits und der zweiten Antenne andererseits empfangenen Signalen wirkt, während die Regelungsschaltung durch das Trägerregelungssignal weiter gesteuert wird, das auf der Basis der von der ersten Antenne kommenden Signale berechnet wird,
   wobei diese Vorrichtung **dadurch gekennzeichnet ist, dass**:
   - die Antennen (10, 12) in einem gemeinsamen Gehäuse (14) montiert sind, das ein Kommutationsmittel (30) enthält, um alternativ ein von der ersten Antenne (10) kommendes Signal und ein von der zweiten Antenne (12) kommendes Signal zur Funkfrequenzsignalempfangs- und -verarbeitungsschaltung (34) zu leiten,
   - das gemeinsame Gehäuse (14) durch ein einziges Koaxialkabel (17) mit der Funkfrequenzsignalempfangs- und -verarbeitungsschaltung (34) verbunden ist,
   - die Ausgänge der Antennen mit dem Koaxialkabel über Antennenvorverstärker (PRA, PRB) verbunden sind,
   - die Antennenvorverstärker von dem Koaxialkabel gespeist werden,
   - die Empfangs- und Verarbeitungsschaltung ein Mittel (36) umfasst, um auf dem Koaxialkabel ein periodisches Steuersignal des Kommutationsmittels zu erzeugen,
   - das Kommutationsmittel mit dem Koaxialkabel verbunden ist und Mittel zum Erkennen des periodischen Steuersignals umfasst.

2. Vorrichtung nach Anspruch 1, **dadurch gekennzeichnet, dass** das Mittel zum Berechnen eines Regelungssignals des Codes jedes Kanals auf der Basis der von den zwei Antennen kommenden Signalen unabhängig von der Kommutation der Antennen wirkt.

3. Vorrichtung nach einem der Ansprüche 1 und 2, **dadurch gekennzeichnet, dass** das Mittel zum Berechnen des Trägerregelungssignals Mittel zum Bestimmen der ersten digitalen Werte IpA und QpA, die jeweils Korrelationsergebnisse in der Phase und in der Phasenquadratur am Ende einer Dauer repräsentieren, die gleich der Dauer des pseudozufälligen Codes ist, während des Empfangs der Signale von der ersten Antenne (10), und von zweiten digitalen Werten, die IbB und QpB entsprechen, während des Empfangs der Signale von der zweiten Antenne (12), und Mittel zum Berechnen eines digitalen Wertes arctg(QpA/IpA) umfasst, der zum Erzeugen eines Trägerphasenregelungssignals von den zwei Antennen dient, während des Empfangs der Signale.

4. Vorrichtung nach Anspruch 3, **dadurch gekennzeichnet, dass** das Mittel zum Berechnen der Phasendifferenz Mittel zum Berechnen eines digitalen Wertes atan2[(IpB.QpA-QpB.IpA),(IpA.IpB+QpA.QpB)] umfasst, der die Phasendifferenz zwischen den von den beiden Antennen empfangenen Signalen von demselben Satelliten repräsentiert.

5. Vorrichtung nach einem der Ansprüche 1 bis 4, **dadurch gekennzeichnet, dass** das Mittel zum Erzeugen eines periodischen Steuersignals ein Mittel umfasst, um alternativ zwei auf die durch diese Verbindung gehenden Funkfrequenzsignale überlagerte Gleichspannungspegel (V1, V2) an den Ausgang (40) des Koaxialkabels anzulegen, und die Mittel zum Erkennen des periodischen Steuersignals einen Spannungspegeldetektor (COMP) zum Erkennen des Spannungspegels am Eingang (42) des Koaxialkabels umfassen und das Kommutationsmittel einen Kommutator (K) umfasst, der vom Pegeldetektor gesteuert wird, um eine von der Gleichspannung auf dem Kabel genommene Speisespannung (V0) entweder zu einem mit der ersten Antenne (10) verbundenen ersten Antennensignalverstärker (PRA) oder zu einem mit der zweiten Antenne (12) verbundenen zweiten Verstärker (PRB) zu leiten, je nach dem erfassten Spannungspegel, wobei die Ausgänge der beiden Verstärker mit dem Eingang (42) des Kabels verbunden sind, um am Ausgang (40) des Kabels entweder die Signale von der ersten Antenne oder die Signale von der zweiten Antenne zu senden, je nach dem am Ausgang des Kabels anliegenden Gleichspannungspegel.

6. Vorrichtung nach einem der vorherigen Ansprüche, **dadurch gekennzeichnet, dass** das Kommutationsmittel (30) der Antennen mit einem Periodenvielfachen der Periode des pseudozufälligen Codes wirkt.

EP 1 373 923 B1

FIG.1

14

EP 1 373 923 B1

FIG.2

15

FIG.3

EP 1 373 923 B1

Voie P

Voie E-L

de 38
24,58 MHz

100 MHz

+0,42 MHz
BLU

25 MHz

Ibb

Qbb

Code P

Code P

∑ 250   54
Ip

∑ 250   55
Qp

100 kHz

100 kHz

Code E-L   57

Code E-L   56

Ibb

Qbb

∑ 250
Qd

∑ 250
Id

100 kHz

100 kHz

Ip Cos p

Ip Sin p

Qp Sin p

Qp Cos p

Cos p   Sin p

Id Sin p

Id Cos p

Qd Cos p

Qd Sin p

Ip Cos p + Qp Sin p

Qp Cos p − Ip Sin p

Qd Cos p − Id Sin p

Id Cos p + Qd Sin p

Code P
P
E-L
Code E-L

50

52
Cos
Sin

100 kHz

NCO 1

NCO 2

25 MHz

100 kHz

p

2 kHz

∑ 50   68

∑ 100   64
IpA
IpB

1 kHz

∑ 100   65
QpA
QpB

1 kHz

∑ 100   67
QdA
QdB

1 kHz

∑ 100   66
IdA
IdB

de 18 et vers 18

FIG.4

**EP 1 373 923 B1**

**RÉFÉRENCES CITÉES DANS LA DESCRIPTION**

**Documents brevets cités dans la description**

- EP 0591835 A
- US 6154170 A

- FR 0005183